# EUROPEAN PATENT SPECIFICATION

(11) **EP 1 101 413 B1**
(45) Date of publication and mention of the grant of the patent: **24.03.2004**
(21) Application number: 99309188.3
(22) Date of filing: 18.11.1999
(51) Int. Cl.: A23L 1/308, A23P 1/08

(54) **Method for producing an additive for bread and additive for bread**
Verfahren zur Herstellung eines Lebensmittelzusatzes für die Backindustrie und Produkt erhältlich dadurch
Méthode de production d'un additif alimentaire pour l'industrie boulangère et produit susceptible d'être obtenu par celle-ci

(43) Date of publication of application: 23.05.2001
(73) Proprietor: Koshiishi, Ikuo, Kofu-shi, Yamanashi-ken (JP)
(72) Inventor: Koshiishi, Ikuo, Kofu-shi, Yamanashi-ken (JP)
(74) Representative: Harding, Richard Patrick

(56) References cited:
- EP-A- 0 835 612
- US-A- 4 568 557
- US-A- 4 673 578
- US-A- 5 476 678
- PATENT ABSTRACTS OF JAPAN vol. 013, no. 227 (C-600), 25 May 1989 (1989-05-25) & JP 01 039953 A (NISSHIN FLOUR MILLING CO LTD), 10 February 1989 (1989-02-10)
- PATENT ABSTRACTS OF JAPAN vol. 012, no. 110 (C-486), 8 April 1988 (1988-04-08) & JP 62 236453 A (TAKESHI TANABE), 16 October 1987 (1987-10-16)
- PATENT ABSTRACTS OF JAPAN vol. 1995, no. 04, 31 May 1995 (1995-05-31) & JP 07 008158 A (RITSU YASUTAKE;OTHERS: 01), 13 January 1995 (1995-01-13)

## Description

The present invention related to a method for producing additive for bread and additive for bread. The additive of the present invention is applicable particularly, but not exclusively, to use for food such as loaves of bread, cracker biscuits, cakes, cookies, sorts of noodles, sorts of pasta such as spaghetti or ravioli and, dog food.

Conventional rice bran, that is taken as a by-product in the process of polishing unmilled rice, contains a large quantity of high nutritive essential fatty acids such as minerals, vitamins, fiber and linoleum acid.

The fiber, which is contained particularly in a large quantity, has the effect of controlling increasing serum cholesterol, or preventing obesity and diabetes, and of removing poisonous substance in food preventing appendicitis and colon cancer.

In a recent study (Fukuoka Preference Institute for Hygiene and Environment ) it has been shown that dioxins such as polychlorinated dibenzo-p-dioxins (PCDDs) and polychlorinated dibenzofurancs (PCDF's), which are accumulated in the human body, can be removed by the fiber contained in the rice bran.

Accordingly, Japanese Patent Application Laid-Open No. Hei 7-8158 and Sho 63-58544 disclose the use of the roasted or heat-treated rice bran as an additive for foods such as bread or cookies.

However, even though the roasted or heat-treated rice bran is added only in the quantity of 5 to 10% by weight of the food the consumer tends to refuse such foods on the ground of the unique smell and bitterness derived from the rice bran.

Japanese Patent Publication No. 01039953, published 10 February 1989, by Nisshin Flour Milling Co., Ltd, teaches the production of pet food whereby the required raw materials are blended, granulated, and then dried. The resulting granular material is coated with an oil, and thereafter a flavour coating is applied followed by a heat treating step. The raw materials may include such as corn flour, wheat rice, rice flour, meat meal, chicken meal, fish meal, soya bean, peanut oil cake, rice bran, and wheat bran, together with soya bean oil, lard, beef tallow. The oil with which the granular material is coated is a suitable animal or vegetable fat or oil; and flavour ingredients such as milk, beef, or onion flavour, or even yeast powder, are applied to the granular material.

European Patent Application No. 0835 612 A2, published 15 April 1998, discusses the use of fibres in a fat-based confection, and specifically teaches that the solidification rate of a fat-based confection may be increased when 0.1% up to 2.0% of insoluble fibre by weight are added to the confection. The insoluble fibres include soy, rice bran, and cocoa powder.

US Patent No. 5476678 issued 19 December 1995, relates to chewy or soft textured confections or candy that are intended for use as a dietary supplement, because they are fibre-enhanced or fortified by fibres such as cereals brans, soya fibre, oat fibre, citrus fibre, corn bran, wheat bran, rice bran, barley bran, various seed fibres, apple fibre, pea fibre, sugar beat fibre, and peanut fibre. The chewy confection can have a toffee-like candy characteristic, or a nougat-like texture

US Patent No. 4568557 issued 4 February 1986 and 4673578 issued 16 June 1987, relate to high dietary fibre-containing snack foods where the product contains from about 5% up to about 30% by weight of a dietary fibre. The fibre is soaked in a food grade oil such as peanut butter, and is mixed with a compound coating which serves as a binder and a processing aid for extrusion of the mixture into shapes for immediate consumption. It is intended that no baking, cooking, toasting, or other pre-consumption process is necessary.

In view of the foregoing, it is an object of the present invention to provide a method for producing an additive for bread and additive for bread which prevent the unique smell and bitterness derived from the rice bran. It is another object of the present invention to provide a method for producing a method for producing an additive for bread and additive for bread which maintain a taste and effect provided by the rice bran even though the rice bran is used as the additive for food such as a loaves of bread, cracker biscuits, cakes, cookies, sorts of noodles, sorts of pasta such as a spaghetti or ravioli, dog food.

According to one aspect of the present invention there is provided a method of producing an additive for bread or the like, comprising the steps of:
(a) eliminating water from rice bran to produce dried rice bran, said water eliminating step comprising roasting or drying the rice bran;
(b) coating the dried rice bran with an oil-fat by adding the oil-fat to the dried rice bran and mixing the oil-fat and dried rice bran until the surface of the dried rice is coated with the oil-fat; and
(c) adding 0.1 to several percent by weight of a powdered charcoal, and liquid seasoning including raw sugar or honey, to the rice bran prior to said water eliminating step, said water eliminating step comprising roasting or drying the rice bran;

According to another aspect of the present invention there is provided a additive for bread or the like comprising:
(a) rice bran that has had water eliminated therefrom;
(b) an oil-fat coated on the surface of said rice bran; and
(c) 0.1 to several percent by weight of a powdered charcoal, and liquid seasoning including raw sugar or honey, mixed with the rice bran prior to eliminating water therefrom.
The above and further objects and novel features of the invention will more fully appear from the following detailed description when the same is read in connection with the accompanying drawings.

It is to be expressly understood, however, that the drawings are for the purpose of illustration only and are not intended as a definition of the limits of the invention.

### BRIEF DESCRIPTION OF THE DRAWINGS

Fig. 1 is a flow chart showing a first embodiment of the present invention;
Fig. 2 is an explanatory view of a water elimination process showing a background embodiment;
Fig. 3 is an explanatory view of an oil-fat coating process showing a background embodiment;
Fig. 4 is an expanded sectional view of a particle of a rice bran coated by oils-fats;
Fig. 5 is an explanatory view of making bread dough;
Fig. 6 is an explanatory view of making Udon dough (wheat vermicelli);
Fig. 7 is an explanatory view of making French bread dough;
Fig. 8 is a flow chart showing a background embodiment;
Fig. 9 is an explanatory view of a seasoning process showing a background embodiment;
Fig. 10 is an explanatory view of a water elimination process and an oil-fat coating process;
Fig. 11 is an explanatory view of making cloth of bread;
Fig. 12 is a flow chart showing an embodiment of the present invention;
Fig. 13 is an explanatory view of a seasoning process showing an embodiment of the present invention;
Fig. 14 is an explanatory view of a water elimination process and an oil-fat coating process; and
Fig. 15 is an explanatory view of making bread dough.

Preferred embodiments of the present invention are described in more details below referring to the accompanying drawings.

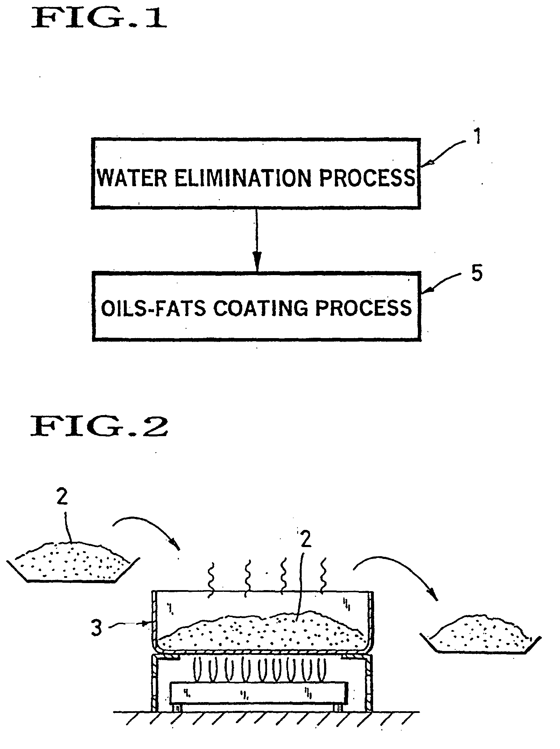

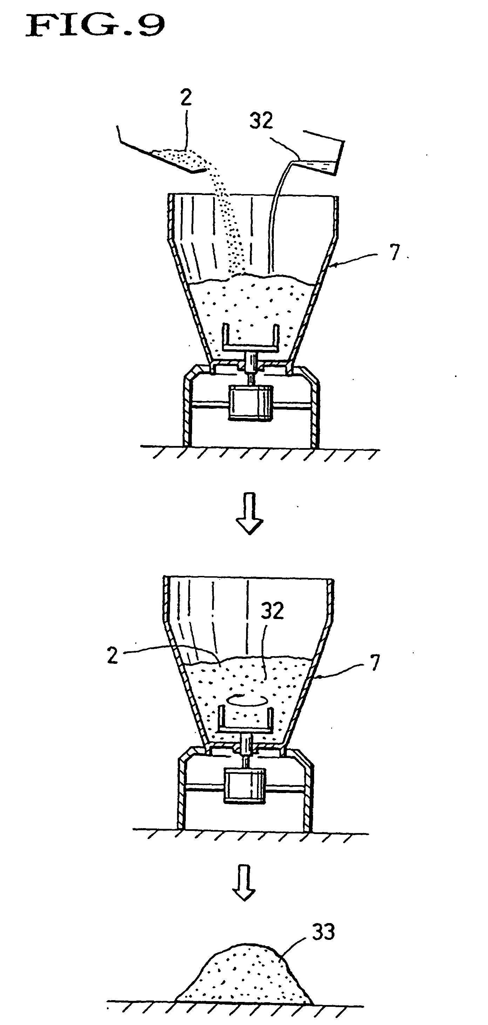

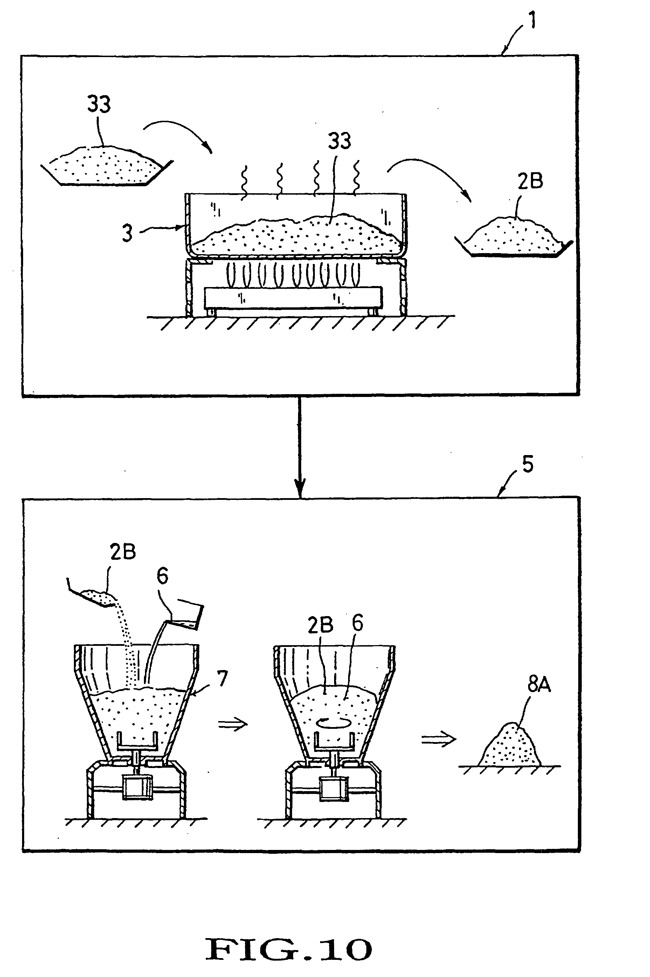

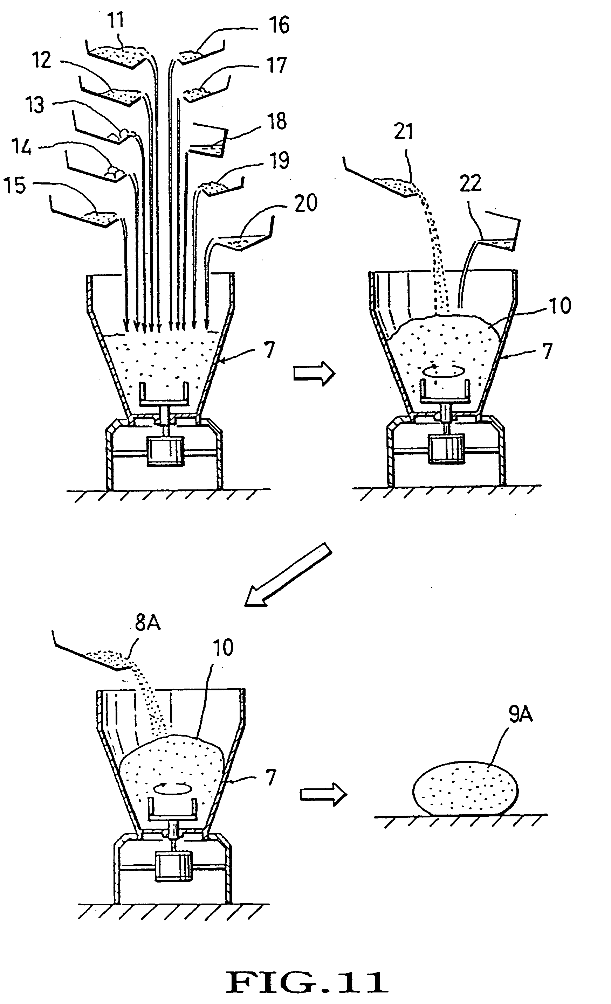

An understanding of the background may be best gained by reference to FIGS. 1 to 12. Numeral 1 shows a water elimination process to remove water contained in fresh rice bran 2. As illustrated in Fig. 2, the water elimination process 1 eliminates the water until the quantity of the contained water decreases, to two to three percent for example, by roasting with a roaster 3 or drying the rice bran 2.

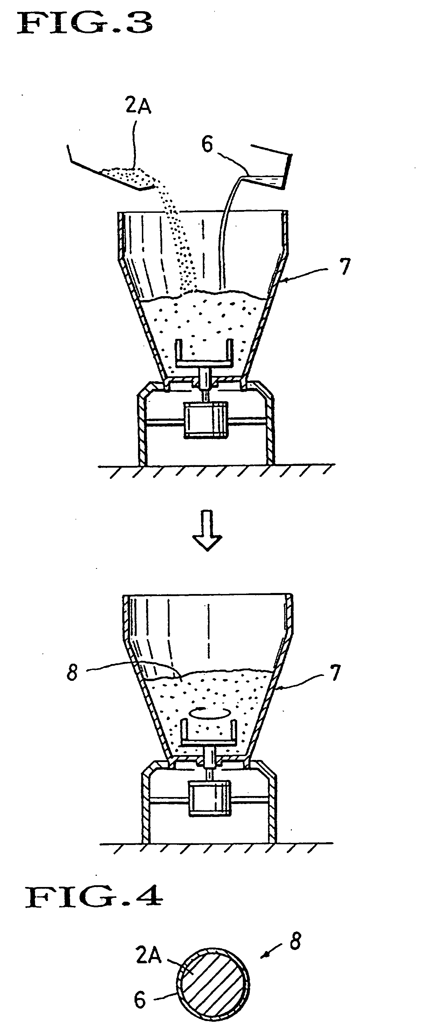

Numeral 5 shows an oil-fat coating process to coat a surface of a dried rice bran 2A by an oil-fat 6. As illustrated in Fig. 3, for example, to 1kg of dried rice bran 2A that the water elimination process eliminates the water, 600g of the oil-fat 6 is added and mixed. Thus, as illustrated in Fig. 4, the oil-fat coating process 5 produces an additive 8 for bread by mixing the dried rice bran 2A and oil-fat 6 by using a mixer 7.

Moreover, the oil-fat 6 in this process is an ingredient of the bread dough, such as shortening, margarine, salad oil, olive oil, fresh butter and so forth.

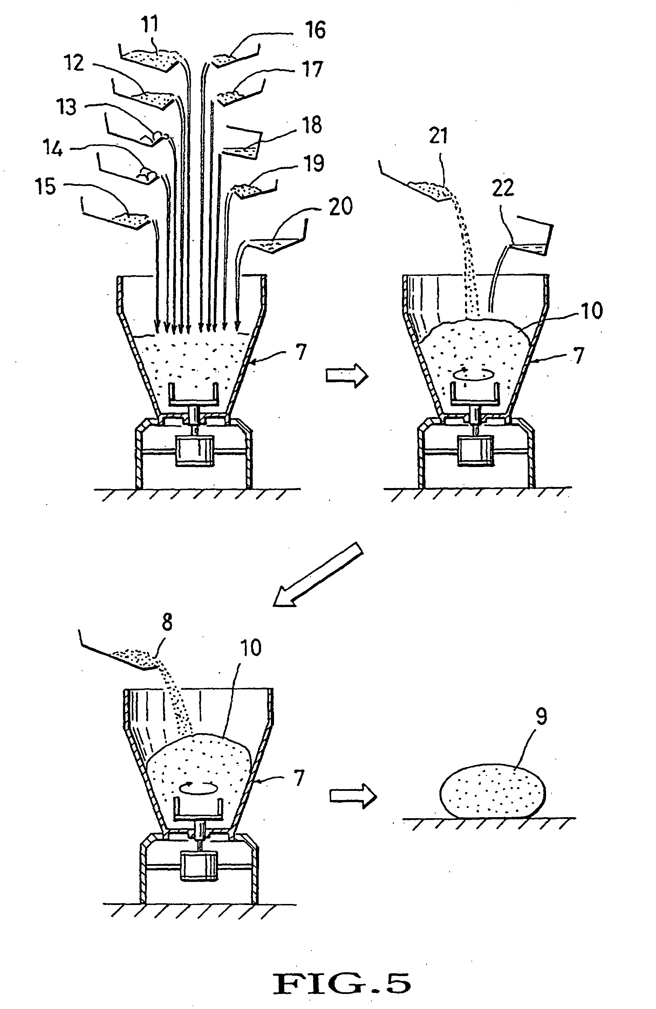

As illustrated in Fig. 5, in case of making a dough 9 of bread by using the additive 8, which is produced by the method for producing the additive of bread, 4kg of wheat 11 and a material of dough body 10 of the bread, 1kg of wheat flour 12, 400g of shortening 13, 200g of fresh butter 14, 250g of yeast having a freezing resistance 15, 8g of yeast-food having freezing resistance 16, 30g of molt 17, 200g of cream or condensed milk 18, 600g of sugar 19, and 500g of eggs are put into a mixer 7. In addition, a total weight of 2.2kg of skimmed powdered milk 21 and water 22 is added into the mixer 7 and stirred.

This stirring takes about two minutes at slow speed at first, and then, about three minutes at medium speed.

Later, a dough body 10 of bread needs to be stirred about seven minutes at high speed to 80% of completion.

Next, to the wheat flour, 5 to 80% by weight of the additive 8 of bread, 20% by weight in this embodiment, is added into the mixer 7. After it stirred for two to three minutes at medium speed, the dough 9 of bread is produced.

Additionally, the completion of the dough 9 is judged on checking its stretch and stickiness. It is preferred that the dough 9 is around 26°C at completion.

Moreover, the additive 8 may be added into the mixer 7 from the start and mixed with materials of the bread dough body 10. However, in this case, it is necessary to take care such that the additive 8 does not absorb the water.

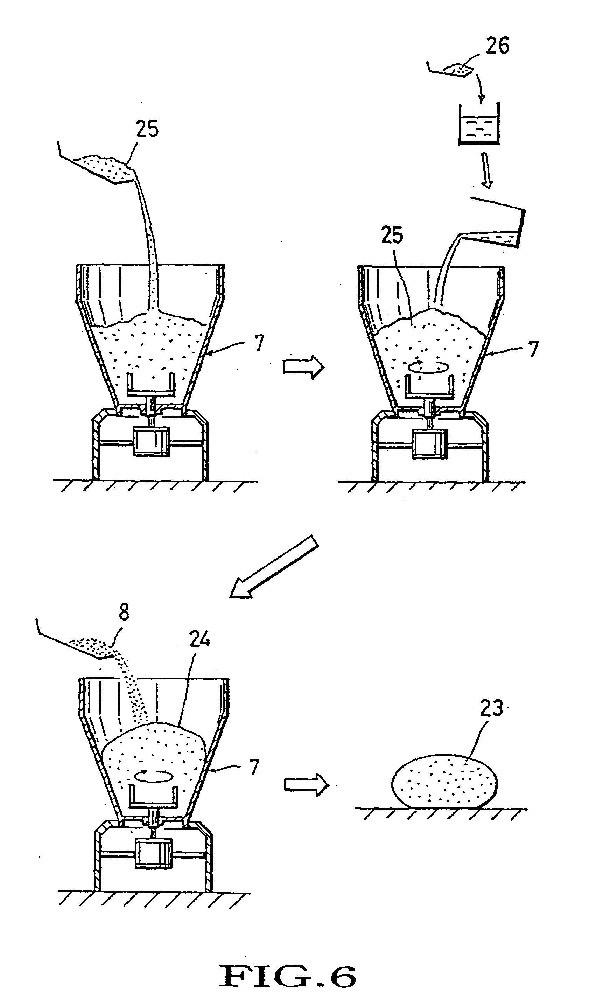

As illustrated in Fig. 6, in case of making a dough 23 of Udon (Japanese wheat vermicelli) by using the additive 8 of bread, 500g of wheat 25 as materials of a dough body 24 of the Udon is prepared as shown in Fig. 6. To 280ml of water, 40g of salt is added and mixed with such water. The aqueous solution is added to the wheat 25 and mixed on the mixer 7. Then, a lump is produced. After that, to the wheat flour 25, 5 to 80% by weight of the additive 8 of bread, 40% by weight in this embodiment, is thoroughly mixed with the lump. The dough 23 of Udon can be made.

In this case, a dough of other noodles, past such as spaghetti or ravioli, cakes or cookies can be made using the different materials and quantity of the dough body.

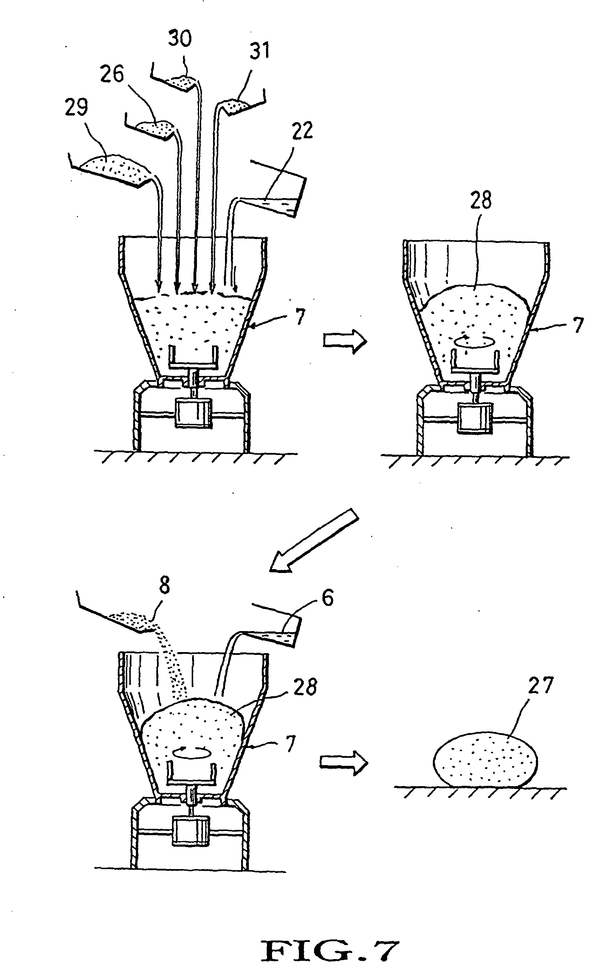

As illustrated in Fig. 7, in case of making French bread dough 27 containing 30% by weight of the additive 8, 3kg of French bread powder 29 as materials of a dough body 28 of the French bread, 45g of salt 26, 18g of dried molt 30, 30g of dried yeast 31, and 1.86kg of water 22 are added into the mixer 7. Then, the mixer 7 stirs the mixture for six minutes at slow speed, and then for one minute at a medium speed. After that, 350g of the oil-fat 6 and 900g of the additive 8 of bread are added. After it is stirred for two minutes at low speed, the French bread dough 27 can be produced.

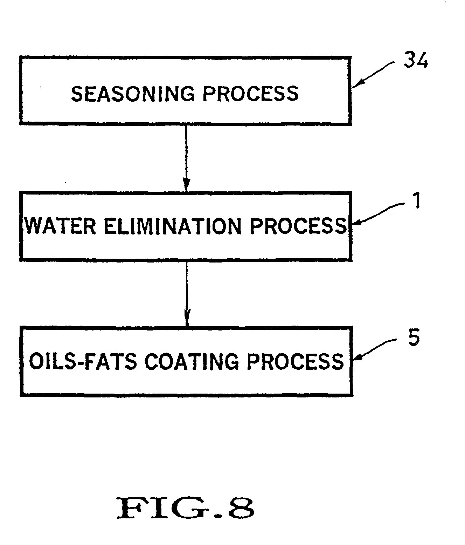

A second background art embodiment is shown in Figs. 8 to 11. It is distinguished from the first embodiment by the fact that a seasoning process 34 is conducted so that seasoned rice bran 33 can be produced before the water elimination process 1. In the seasoning process 34, the rice bran 2 is added a liquid seasoning 32 such as raw sugar or honey for taste and mixed by the mixture 7. After that, the water elimination process 1 is conducted, a dried seasoned rice bran 2B is produced, and the oil-fat coating process 5 is processed. An additive 8A of bread produced by using such seasoning process 34 can be used as the seasoned additive 8A of bread, even if the seasoned additive 8A is added to the dough body of bread, cakes, cookies, noodles, pasta or food for dog, and the dough 9A of bread is produced by the above-mentioned method, the dough 9A can be used without losing taste.

Moreover, other than raw sugar and honey, a liquid seasoning 32 may be utilized for a single or plurality of materials such as cinnamon, cocoa, coffee, chocolate, soy-bean paste, soy sauce, powdered green teat, mugwort, fruit paste, wheat gluten, fruit wine, spice, sweetener, fruit juice, vegetable extract, jam, or cola.

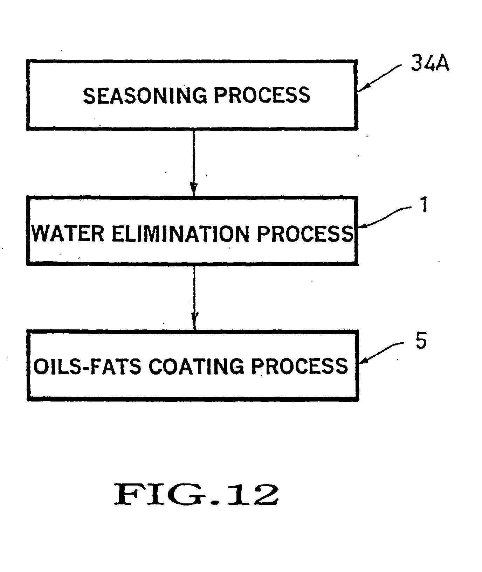

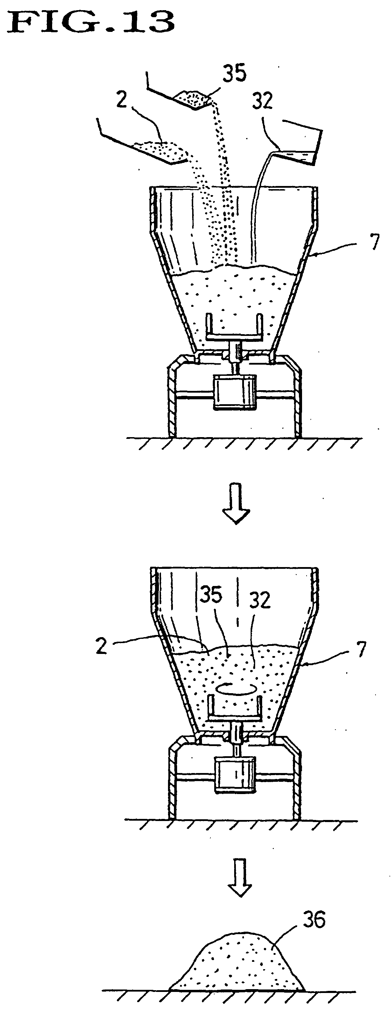

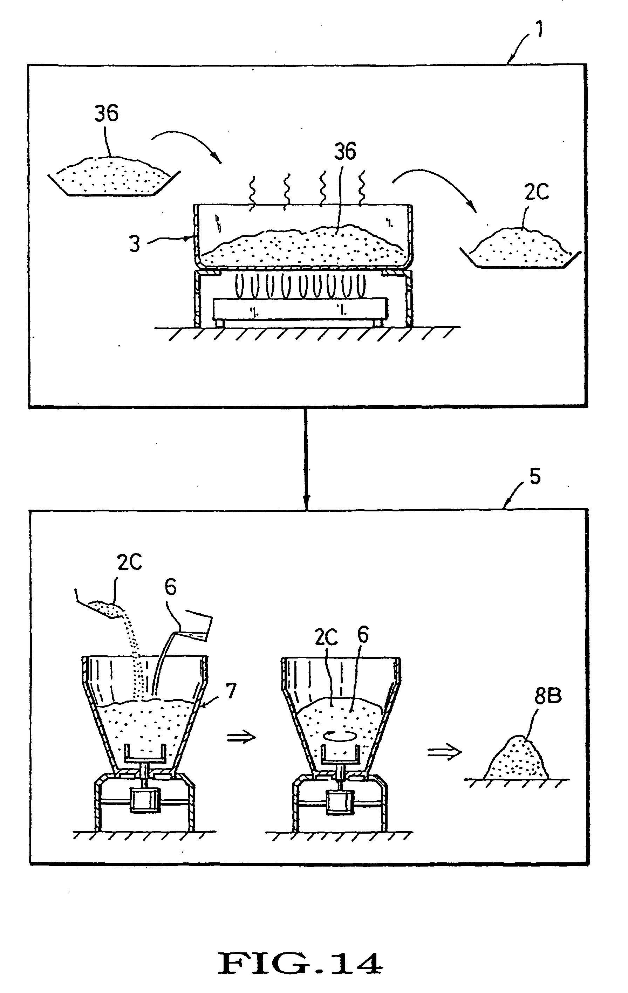

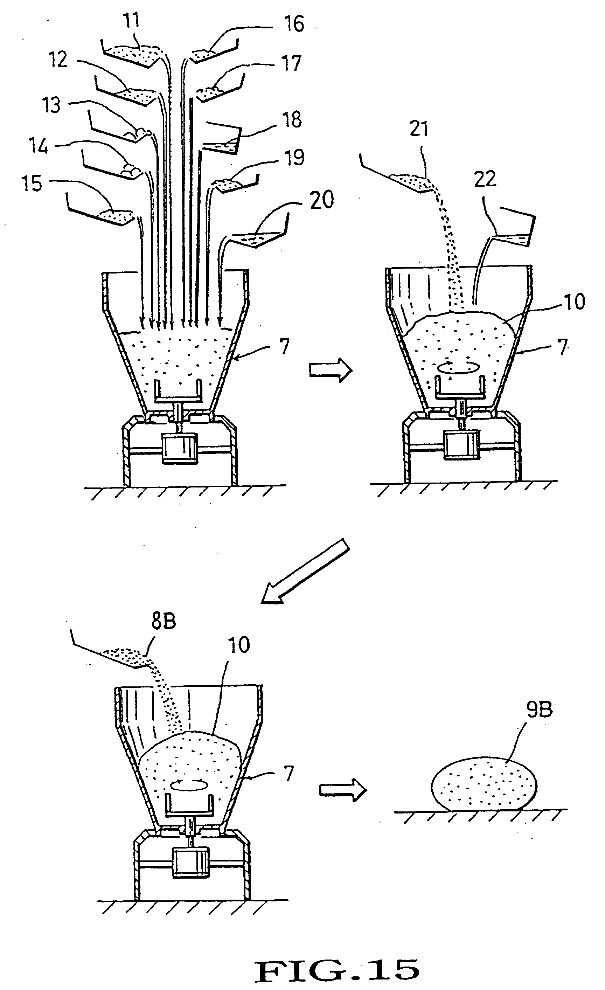

An embodiment of the present invention is shown in Figs. 12 to 15. It is distinguished from the second background art embodiment by the fact that a seasoned rice bran 36 containing charcoal is produced. In this process, to the rice bran 2, 0.1 to several percent by weight of powdered charcoal 35, preferably made from bamboo, and the liquid seasoning 32 are added in a mixer 7 and mixed. After the water elimination process 1, dried-seasoned rice bran containing charcoal 2C is produced. Next, an additive 8B is produced by executing the oil-fat coating process 5 such that the oil-fat 6 coats the surfaces of the particle of the rice bran 2 and the powdered charcoal 35 of the dried-seasoned rice bran 2C respectively. Even if the additive 8B containing charcoal produced by the seasoning process 34A is added to the dough body of bread, cakes, cookies, noodles, pasta or food for dogs, and the dough 9B is produced as the above-mentioned method, the bread based on the dough 9B can be produced without losing taste.

By eating bread made of the additive 8B containing such charcoal the charcoal absorbs the accumulated dioxins, and it can be discharged without constipation.

In the embodiment of the present invention, to the rice bran 2, 0.1 to several percent by weight of the powdered charcoal 35 may be mixed with a liquid such as charcoal beforehand, and then, the surface of the particle of charcoal may be coated by such chocolate so as to remove the unique smell of the charcoal.

Moreover, in the case of the dough production, the seasoned rice bran 33 and the powdered charcoal 35 coated by chocolate may be used without the dried-seasoned rice bran 2C containing charcoal. In detail, after the dough body of bread is mixed by kneading, the mixture with the seasoned rice bran 33 is mixed by kneading for six minutes. After that, the powdered charcoal 35 may be added and stirred evenly.

In addition, concerning the oil-fat coating process, this process may allow the oil-fat 6 such as fresh butter or margarine formed in a solid condition at a normal temperature of low temperature to transform it to a liquid condition. Then, the liquid is added to one of the rice brans selected from the dried rice bran 2A, dried-seasoned rice bran 2B or dried-seasoned rice bran 2C containing charcoal and mixed, and the liquid mixture is processed such that it is formed in the shape of a sheet at a normal low temperature. As a result, one of the dried rice bran 2A, dried-seasoned rice bran 2B or dried-seasoned rice bran 2C is selected. The selected rice bran is coated by oil-fat 6.

### NOTE:

1. A background art bread dough includes a dough body mixed with seasoning such as wheat , water, sugar and an additive composed of rice bran mixed with the dough body, the rice bran eliminating the water by roasting and drying, and an oil-fat coating such that the oil-fat covers a surface of a particle of the rice bran.
2. A background art bread dough includes a dough body mixed with seasoning such as wheat, water or sugar, an additive composed of seasoned rice bran mixed with the dough body, the seasoned rice bran being dried after a liquid seasoning of raw sugar or honey is mixed therewith, and an oil-fat coating such that the oil-fat covers a surface of a particle of the seasoned rice bran.
3. A bread dough of the present invention includes a dough body mixed with seasoning such as wheat, water or sugar; and an additive composed of dried-seasoned rice bran containing charcoal mixed with the dough body, the dried-seasoned rice bran adding powdered charcoal and being dried after a liquid seasoning such as raw sugar or honey, mixed and dried therewith, and an oil-fat coating such that the surface of the particles of seasoned rice bran containing the charcoal and the surfaces of the particle of charcoal are coated by the oil-fat.

As set forth above, the advantages of the present invention are as follows:
(1) The rice bran as an additive can be used without spoiling the taste.
(2) As discussed above, it is relatively easy to produce since the rice bran is just coated by the oil-fat after water has been eliminated.
   Therefore, it is unnecessary to use an expensive facility, and it is easy to produce.
(3) As discussed above, it lasts long term and is economical to use since it eliminates the water and covers the oil-fat.
(4) As discussed above, the rice bran can be used as an additive so that the rice bran can be used effectively and can act on the human body with beneficial effect due to eating.

## Claims

1. A method of producing an additive for bread or the like, comprising the steps of:
(a) eliminating water from rice bran to produce dried rice bran, said water eliminating step comprising roasting or drying the rice bran;
(b) coating the dried rice bran with an oil-fat by adding the oil-fat to the dried rice bran and mixing the oil-fat and dried rice bran until the surface of the dried rice is coated with the oil-fat; and
adding 0.1 to several percent by weight of a powdered charcoal, and liquid seasoning including raw sugar or honey, to the rice bran prior to said water eliminating step, said water eliminating step comprising roasting or drying the rice bran;

2. An additive for bread or the like comprising:
(d) rice bran that has had water eliminated therefrom;
(e) an oil-fat coated on the surface of said rice bran; and
(f) 0.1 to several percent by weight of a powdered charcoal, and liquid seasoning including raw sugar or honey, mixed with the rice bran prior to eliminating water therefrom.

## Patentansprüche

1. Verfahren zur Herstellung eines Zusatzmittels für Brot oder dergleichen, welches die Schritte aufweist, die darin bestehen:
(a) Wasser aus Reiskleie zu eliminieren, um eine getrocknete Reiskleie zu erzeugen, wobei der das Wasser eliminierende Schritt ein Rösten oder ein Trocknen der Reiskleie umfasst;
(b) die getrocknete Reiskleie mit einem Öl-Fett dadurch zu beschichten, dass Öl-Fett zu der getrockneten Reiskleie hinzu gegeben wird und das Öl-Fett mit der getrockneten Reiskleie vermischt wird, bis die Oberfläche der getrockneten Reiskleie mit dem Öl-Fett beschichtet ist; und
von 0,1 bis zu mehreren Gewichtsprozent einer pulverförmigen Holzkohle und eines Rohzucker oder Honig enthaltenden flüssigen Gewürzes, vor dem das Wasser eliminierenden Schritt zu der Reiskleie hinzu zu fügen, wobei der das Wasser eliminierende Schritt ein Rösten oder ein Trocknen der Reiskleie umfasst.

2. Zusatzmittel für Brot oder dergleichen, welches enthält:
(d) Reiskleie aus welcher Wasser eliminiert worden ist;
(e) ein Öl-Fett, das auf die Oberfläche der Reiskleie drauf beschichtet worden ist, und
(f) von 0,1 bis zu mehreren Gewichtsprozent einer pulverförmigen Holzkohle und eines Rohzucker oder Honig enthaltenden flüssigen Gewürzes, welche mit der Reiskleie vermischt werden bevor das Wasser aus derselben eliminiert wird.

## Revendications

1. Procédé de production d'un additif pour le pain ou équivalent, comprenant les étapes:
(a) d'élimination d'eau à partir de son de riz pour produire du son de riz séché, ladite étape d'élimination d'eau consistant à griller ou à sécher le son de riz;
(b) d'enrobage du son de riz séché avec une huile-graisse en ajoutant l'huile-graisse au son de riz séché et en mélangeant l'huile-graisse et le son de riz séché jusqu'à ce que la surface du riz séché soit enrobée avec l'huile-graisse; et
(c) d'ajout de 0,1 à plusieurs pourcent en poids d'un charbon de bois en poudre, et d'un assaisonnement liquide incluant du sucre brut ou du miel, au son de riz avant ladite étape d'élimination d'eau, ladite étape d'élimination d'eau consistant à griller ou à sécher le son de riz.

2. Additif pour le pain ou équivalent comprenant:
(d) du son de riz dont l'eau a été éliminée;
(e) une huile-graisse enrobée sur la surface dudit son de riz; et
(f) de 0,1 à plusieurs pourcent en poids d'un charbon de bois en poudre, et un assaisonnement liquide incluant du sucre brut ou du miel, mélangés au son de riz avant l'élimination d'eau à partir de celui-ci.
